# EUROPÄISCHE PATENTSCHRIFT

(11) **EP 2 518 382 B1**
(45) Veröffentlichungstag und Bekanntmachung des Hinweises auf die Patenterteilung: **22.10.2014**
(21) Anmeldenummer: 12159230.7
(22) Anmeldetag: 13.03.2012
(51) Int. Cl.: F16L 11/08, D04B 1/22

(54) **Schlauch zur Führung von Fluiden**
Hose for conveying fluids
Tuyau souple destiné au transport de fluides

(30) Priorität: 26.04.2011 DE 202011005596 U
(43) Veröffentlichungstag der Anmeldung: 31.10.2012
(73) Patentinhaber: REHAU AG + Co, 95111 Rehau (DE)
(72) Erfinder: Ebert, Carola, 95032 Hof (DE); Goldstein, Jörg, 95028 Hof (DE); Schörner, Georg, 95111 Rehau (DE); Beyer, Klaus, 95111 Rehau (DE)

(56) Entgegenhaltungen:
- EP-A2- 0 039 495
- EP-A2- 0 623 776
- WO-A1-2004/027304
- DE-A1- 2 938 833
- DE-A1- 3 840 584
- DE-C1- 19 737 676
- DE-U1- 7 714 185
- GB-A- 1 449 753
- GB-A- 189 708 135
- US-A- 2 143 852

## Beschreibung

Die Erfindung betrifft einen Schlauch gemäß Oberbegriff des Patentanspruchs 1.

Bandförmig meint, dass die Breite des Armierungselementes deutlich größer als dessen Dicke ist, beispielsweise mehr als doppelt oder mehr als dreimal so groß. Armierte Schläuche sind im Stand der Technik hinlänglich bekannt; sie werden beispielsweise zum Transport von Fluiden im allgemeinen Industriebereich, im Automobilbereich, z. B. als Druckschläuche für Kraftfahrzeuge, oder aber auch für Trinkwasser sowie zum Transport von Wasser in der gewerblichen oder privaten Gartenbewirtschaftung eingesetzt.

Die DE 600 27 000 T2 offenbart einen Schlauch mit einem spiralförmigen Armierungselement, welches im Querschnitt im Wesentlichen kreisförmig ausgebildet ist. Aus der EP 0 623 776 B1 ist eine Armierungsschicht für einen Schlauch offenbart, welche maschenförmig ausgebildet und schlauchförmig gestaltet ist. Eine derartige Armierung ist mit vergleichsweise hohen Herstellungskosten verbunden.

Die DE 29 38 833 A1 zeigt einen fadenarmierten Schlauch mit einer Diagonalarmierung, wobei die Armierungselemente um die das Fluid führende Schlauchschicht gewickelt oder geflochten sind. Derartig fadenarmierte Schläuche besitzen den Nachteil, dass sie zum Abknicken neigen, sofern ein gewisser Verlegeradius unterschritten wird. Unter Zug verschließt sich der Schlauch dann immer mehr, bis er schließlich unbrauchbar wird.

Aus der DE 200 10 082 U1 ist eine Schlaucharmierung bekannt, bei der die Armierungselemente maschenartig miteinander verbunden sind, so dass sie in Analogie zu einem üblichen Maschendrahtzaun entlang der Schlauchlängsachse eine Zick-Zack-Linie bilden.

Bei der aus der DE 34 08 251 A1 bekannten Vorrichtung sind mehrere Armierungselemente übereinander um den Schlauch derart geflochten, dass die Armierungsschicht hierdurch die Schlauchinnenschicht vollständig bedeckt. Solche Schlaucharmierungen besitzen jedoch den Nachteil, dass sie eine lediglich geringe Flexibilität aufweisen und darüber hinaus vergleichsweise teuer in der Herstellung sind.

Ein Schlauch mit den Merkmalen des Oberbegriffs des Patentanspruchs 1 ist aus den Dokumenten GB 1 449 753 A, GB 08135 A A.D. 1897, DE 38 40 584 A1, DE 77 14 185 U1, WO 2004/027304 A1, DE 197 37 676 C1 und EP 0 039 495 A2 bekannt.

Der Erfindung liegt die Aufgabe zugrunde, einen Schlauch mit den eingangs beschriebenen Merkmalen anzugeben, welcher eine hohe Flexibilität und Knickstabilität aufweist und dabei gleichzeitig kostengünstig herstellbar ist.

Diese Aufgabe wird durch einen Schlauch mit den Merkmalen des Patentanspruchs 1 gelöst. Erfindungsgemäß werden die Vorteile der offenen Armierungsstruktur (wie beispielsweise in der DE 29 38 833 A1 oder der EP 0 623 776 B1 beschrieben) mit dem Ansatz einer eine hohe Knickstabilität gewährleistenden bandförmigen Armierungsstruktur kombiniert, wie sie beispielsweise in der DE 34 08 251 offenbart ist. Die erfindungsgemäße Armierung ist ferner mit einem lediglich geringen Fertigungsaufwand verbunden und daher kostengünstig herstellbar, da eine die Fertigungsgeschwindigkeit erheblich reduzierende Umstrickung des Schlauches hier nicht erforderlich ist. Durch die offene Struktur der Armierungsschicht ist zudem eine direkte Verbindung der Schlauchaußenschicht mit der Schlauchinnenschicht möglich, wodurch die gesamte Formstabilität des Schlauches positiv beeinflusst wird. So ist es beispielsweise möglich, im Bereich der freien Flächen die Schlauchaußenschicht direkt mit der Schlauchinnenschicht zu verschweißen und hierdurch gleichzeitig die Armierungsschicht zwischen diesen beiden Schlauchschichten zu fixieren.

Zweckmäßigerweise sind die bandförmigen Wicklungen des Armierungselementes in Schlauchlängsachse voneinander beabstandet. Dieser Abstand kann beispielsweise das 0,5- bis 5-fache, insbesondere das 1- bis 3-fache, der Bandbreite des Armierungselementes betragen. Es können mindestens zwei Armierungselemente vorgesehen sein, die gegensinnig spiralförmig angeordnet sind. In diesem Fall ergibt sich eine kreuzförmige Armierung, woraus eine rautenförmige Gestalt der freien Flächen der Armierungsschicht resultiert. Die Armierungselemente können nacheinander um den Schlauch gewickelt oder aber auch alternativ um den Schlauch geflochten sein.

Das Armierungselement kann aus textilen (z. B. Baumwoll- und / oder Kunstfasern) und / oder metallischen und / oder keramischen und / oder polymeren Fäden aufgebaut sein. Im Rahmen der Erfindung liegt auch die Verwendung von Mineral-, z. B. Glas-, und / oder Kohlenstoff- und / oder Aramid- und / oder Basaltfasern als Fadenmaterial, ggf. in Kombination mit einem oder mehreren der zuvor genannten Fadenmaterialien. Durch die Kombination unterschiedlicher Werkstoffe für die Armierungselemente entsteht ein hybrider Aufbau der Armierungsschicht, so dass über diese Materialwahl beispielsweise der Armierungsgrad, die Flexibilität, die Knickstabilität und auch die Herstellkosten sehr variabel gestaltet werden können.

Maschenware entsteht als Gestricke oder Gewirke, bei dem Fäden in maschenförmigen Schleifen (Maschen) ineinander verschlungen bzw. miteinander verstrickt werden. Durch die bandförmige Maschenarmierung können die Vorteile der Maschenarmierung ("Atmen" des Schlauches bei Druckbeaufschlagung) genutzt werden, ohne dass hierzu eine die Fertigungsgeschwindigkeit erheblich reduzierende Umstrickung des Schlauches erforderlich ist. Das Armierungselement kann hierbei mehrere nebeneinander verlaufende Maschen aufweisen. Vorzugsweise beträgt die Maschenweite des Armierungselementes mindestens 1 mm, z. B. mindestens 2 mm.

Das Verhältnis von Innendurchmesser der Schlauchinnenschicht zur Bandbreite des Armierungselementes beträgt zweckmäßigerweise 2 bis 15, vorzugsweise 3 bis 10, z. B. 4 bis 8. So kann eine Bandbreite von 1 bis 5 mm, z.B. 2 bis 3 mm, zweckmäßig sein, beispielsweise bei einem Schlauchinnendurchmesser von 1/2".

Gemäß einer bevorzugten Ausführungsform der Erfindung ist entlang des Armierungselementes mindestens ein Fixierungselement aus Kunststoff, vorzugsweise aus Schmelzklebstoff, angeordnet. Das Fixierungselement kann fadenförmig entlang des Armierungselementes verlaufen. Mit Hilfe des Klebstoffes ist eine sichere Fixierung des Armierungselementes auf der Schlauchinnenschicht oder zur Schlauchaußenschicht hin gewährleistet. Ferner ist eine Fixierung der Armierungselemente zueinander möglich.

Die Schlauchinnenschicht und / oder die Schlauchaußenschicht kann Kunststoff, vorzugsweise PVC, enthalten. In einer besonderen Ausführungsform der Erfindung bestehen eine oder beide vorgenannten, vorzugsweise extrudierten, Schlauchschichten aus Kunststoff, insbesondere PVC. Ferner kann die Schlauchaußenschicht und ggf. auch die Schlauchinnenschicht aus einem durchsichtigen, also transparenten oder transluzenten, Material bestehen. Eine durchsichtige Schlauchaußenschicht ermöglicht die zusätzliche Nutzung der Armierungsschicht als designerisches Element des Schlauches. Ganz allgemein kann / können neben den genannten Schichten zwischen Schlauchinnenschicht und Schlauchaußenschicht eine oder mehrere weitere Schlauchschicht/en vorgesehen sein.

Zweckmäßigerweise weist die Armierungsschicht von den Armierungselementen gebildete Diagonallinien auf, welche vorzugsweise mit der Schlauchlängsachse einen Winkel von 44 bis 64°, vorzugsweise 50 bis 58° einschließen. Besonders bevorzugt ist hier ein Armierungswinkel von ca. 54°, der dem sog. Neutralwinkelbei Schlaucharmierungen bezüglich Längs- zu Querausdehnung bei einer Druckbeaufschlagung entspricht.

Der vorstehend beschriebene erfindungsgemäße Schlauch kann für unterschiedlichste Anwendungen eingesetzt werden. Generell ist er für verschiedenste industrielle Einsatzzwecke geeignet und ist vor allem in Kraftfahrzeugen als Druckschlauch oder aber auch für den Trinkwassertransport sowie zum Transport von Wasser in der gewerblichen oder privaten Gartenbewirtschaftung einsetzbar.

Im Folgenden wird die Erfindung anhand einer lediglich ein Ausführungsbeispiel darstellenden Zeichnung ausführlich erläutert. Es zeigen schematisch:
- Fig. 1: eine Seitenansicht eines erfindungsgemäßen Schlauches,
- Fig. 2a,b: Detailansichten eines erfindungsgemäßen Armierungselementes
- Fig. 3: einen nicht erfindungsgemäßen Schlauch in einer der Fig. 1 entsprechenden Darstellung und
- Fig. 4: den Schnitt A - A in Fig. 3

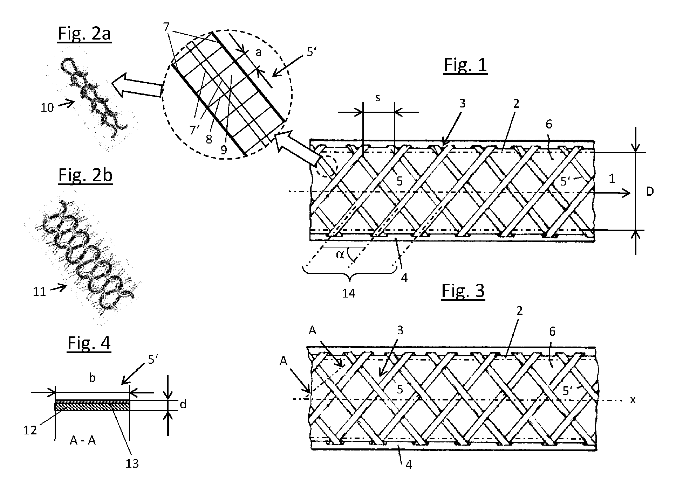

Die Fig. 1 zeigt einen Schlauch zur Führung von Fluiden mit einer vom Fluid 1 beaufschlagten Schlauchinnenschicht 2, einer Armierungsschicht 3 und einer die Armierungsschicht umschließenden, schützenden Schlauchaußenschicht 4. Die Armierungsschicht 3 weist mehrere um die Schlauchinnenschicht 2 angeordnete, bandförmige Armierungselemente 5, 5' auf, die als Maschenware ausgebildet sind. Die Armierungselemente 5 und 5' sind gegensinnig zueinander spiralförmig angeordnet, woraus eine kreuzförmige Armierungsstruktur resultiert. Die Armierungsschicht 3 weist eine offene Struktur mit freien Flächen 6 auf, so dass die Schlauchinnenschicht 2 lediglich teilweise von der Armierungsschicht 3 bedeckt ist. Wie der Fig. 1 ferner zu entnehmen ist, besitzen die freien Flächen 6 eine rautenförmige Gestalt. In diesen Bereichen ist eine direkte Verbindung der Schlauchaußenschicht 4 mit der Schlauchinnenschicht 2 möglich, wodurch gleichzeitig eine Fixierung der kreuzförmigen Struktur der Armierungsschicht 3 erfolgt. Die Schlauchinnenschicht 2 und auch die Schlauchaußenschicht 4 bestehen aus extrudiertem Kunststoff, so dass die in den Schlauchschichten 2, 4 unmittelbar nach deren Herstellung noch enthaltene Extrusionswärme zur Verschweißung der Schlauchschichten 2, 4 miteinander, oder aber auch zur Fixierung der Armierungsschicht 3 auf der Schlauchinnenschicht 2 genutzt werden kann. Im Ausführungsbeispiel ist die Schlauchaußenschicht 4 aus einem durchsichtigen Material gefertigt, so dass die Armierungsschicht 3 zusätzlich als Designelement genutzt wird. Wie der Fig. 1 entnommen werden kann, weisen die bandförmigen Wicklungen der Armierungselemente 5, 5' in Schlauchlängsachse x einen Abstand s zueinander auf. Dieser Abstand beträgt im Ausführungsbeispiel ca. das 2- bis 4-fache der Bandbreite b (s. Fig. 4) der Armierungselemente. Das Verhältnis von Schlauchinnendurchmesser D der Schlauchinnenschicht 2 zur Bandbreite b der Armierungselemente 5, 5' beträgt ca. 8 bis 12.

Der vergrößerte Ausschnitt der Fig. 1 zeigt den Aufbau der Armierungselemente 5, 5' im Detail. Die beiden Randbereiche werden von randseitigen Längsfäden 7 gebildet. In der Mitte sind ein oder mehrere - im Ausführungsbeispiel zwei - mittlere Längsfäden 7' angeordnet, die vorzugsweise dünner als die randseitigen Längsfäden 7 ausgebildet sind. Quer dazu sind in gleichmäßigen Abständen Querfäden 8 angeordnet. Somit verlaufen im Ausführungsbeispiel gemäß Fig. 1 mehrere Maschen 9 nebeneinander, deren Maschenweite a größer als 1 mm ist. Die mittigen Längsfäden 7' und/oder die randseitigen Längsfäden 7 sind mit Schmelzklebstoff beschichtet (nicht näher dargestellt) und weisen somit zusätzlich Fixierungselemente zur Verbindung der Armierungsschicht 3 mit den Schlauchschichten 2 und 4 sowie zur Fixierung der Armierungselemente 5, 5' zueinander auf. Fig. 2a zeigt Maschenstäbchen 10, welche Bestandteil der randseitigen Längsfäden 7 sind. Generell können die als Maschenware ausgebildeten Armierungselemente 5, 5' Maschenstäbchen 10 und/oder Maschenreihen 11 (Fig. 2b) aufweisen. Im Ausführungsbeispiel gemäß Fig. 1 bestehen die Armierungselemente 5, 5' aus textilen Fäden 7, 7', 8, 9 aus Baumwoll- und / oder Kunstfasern.

Bei dem nicht zur Erfindung gehörenden Schlauch gemäß Fig. 3 sind die Armierungselemente 5, 5' als Folie ausgebildet. So können beispielsweise vorgereckte Polymerbänder aus PET als Armierungselemente 5, 5' verwendet werden. Ferner ist auch die Verwendung einer Trägerfolie 12 aus Polyester mit Aluminiumbedampfung 13 denkbar, so wie in Fig. 4 dargestellt. Die Figur 4 ist auch zu entnehmen, dass die Breite b der Armierungselemente 5, 5' generell deutlich größer als dessen Dicke d ist, im Ausführungsbeispiel beträgt das Verhältnis b / d > 5.

In den Figuren 1 und 3 sind unterschiedliche Strukturen der Armierungsschicht 3 dargestellt. Während in Fig. 1 die Armierungselemente 5 nach den Armierungselementen 5' um die Schlauchinnenschicht 2 gewickelt wurden, sind in Fig. 3 die Armierungselemente 5, 5' gemeinsam um die Schlauchinnenschicht 2 geflochten. Die Figuren 1 und 3 zeigen außerdem, dass die Armierungsschicht 3 von den Armierungselementen 5, 5' gebildete Diagonallinien 14 aufweist, welche mit der Schlauchlängsachse x einen Winkel α von ca. 54°, dem sog. Neutralwinkel, einschließen.

## Patentansprüche

1. Schlauch zur Führung von Fluiden mit
- einer vom Fluid (1) beaufschlagten Schlauchinnenschicht (2),
- einer Armierungsschicht (3) und
- optional einer die Armierungsschicht (3) umschließenden Schlauchaußenschicht (4),
wobei die Armierungsschicht (3) mindestens ein spiralförmig um die Schlauchinnenschicht (2) angeordnetes, bandförmiges Armierungselement (5, 5') aufweist, und wobei die Armierungsschicht (3) eine offene Struktur mit freien Flächen (6) aufweist, so dass die Schlauchinnenschicht (2) lediglich teilweise von der Armierungsschicht (3) bedeckt ist, **dadurch gekennzeichnet, dass** das Armierungselement (5, 5') als Maschenware ausgebildet ist.

2. Schlauch nach Anspruch 1, **dadurch gekennzeichnet, dass** die bandförmigen Wicklungen des Armierungselementes (5, 5') in Schlauchlängsachse (x) voneinander beabstandet sind.

3. Schlauch nach Anspruch 1 oder 2, **dadurch gekennzeichnet, dass** mindestens zwei Armierungselemente (5, 5') vorgesehen sind, die gegensinnig zueinander spiralförmig angeordnet sind.

4. Schlauch nach einem der Ansprüche 1 bis 3, **dadurch gekennzeichnet, dass** das Armierungselement (5, 5') aus textilen und / oder metallischen und / oder keramischen und / oder polymeren Fäden (7, 7', 8, 9) aufgebaut ist.

5. Schlauch nach einem der Ansprüche 1 bis 4, **dadurch gekennzeichnet, dass** die Maschenweite des Armierungselementes (5, 5') mindestens 1 mm beträgt.

6. Schlauch nach einem der Ansprüche 1 bis 5, **dadurch gekennzeichnet, dass** das Verhältnis von Innendurchmesser (D) der Schlauchinnenschicht (2) zur Bandbreite (b) des Armierungselementes (5, 5') 2 bis 15, vorzugsweise 3 bis 10, z. B. 4 bis 8, beträgt.

7. Schlauch nach einem der Ansprüche 1 bis 6, **dadurch gekennzeichnet, dass** entlang des Armierungselementes (5, 5') mindestens ein Fixierungselement aus Klebstoff, vorzugsweise aus Schmelzklebstoff, angeordnet ist.

8. Schlauch nach einem der Ansprüche 1 bis 7, **dadurch gekennzeichnet, dass** die Schlauchinnenschicht (2) und ggf. auch die Schlauchaußenschicht (4) aus einem durchsichtigen Material gefertigt ist.

9. Schlauch nach einem der Ansprüche 3 bis 8, **dadurch gekennzeichnet, dass** die Armierungsschicht (3) von den Armierungselementen (5, 5') gebildete Diagonallinien (14) aufweist, welche vorzugsweise mit der Schlauchlängsachse (x) einen Winkel (α) von 44 bis 64°, insbesondere 50 bis 58°, einschließen.

## Claims

1. Hose for conveying fluids, having
- an inner hose layer (2) which is exposed to the fluid (1),
- a reinforcement layer (3), and
- optionally, an outer hose layer (4) which encloses the reinforcement layer (3),
wherein the reinforcement layer (3) displays at least one tape-shaped reinforcement element (5, 5') which is helically disposed about the inner hose layer (2), and wherein the reinforcement layer (3) displays an open structure having free faces (6), such that the inner hose layer (2) is merely covered in part by the reinforcement layer (3), **characterized in that** the reinforcement element (5, 5') is configured as knitted goods.

2. Hose according to Claim 1, **characterized in that** the tape-shaped windings of the reinforcement element (5, 5') are spaced apart in the longitudinal hose axis (x).

3. Hose according to Claim 1 or 2, **characterized in that** at least two reinforcement elements (5, 5'), which are helically arranged in opposite senses of direction in relation to one another, are provided.

4. Hose according to one of Claims 1 to 3, **characterized in that** the reinforcement element (5, 5') is constructed from textile and/or metallic and/or ceramic and/or polymer threads (7, 7', 8, 9).

5. Hose according to one of Claims 1 to 4, **characterized in that** the mesh aperture of the reinforcement element (5, 5') is at least 1 mm.

6. Hose according to one of Claims 1 to 5, **characterized in that** the ratio of inner diameter (D) of the inner hose layer (2) to tape width (b) of the reinforcement element (5, 5') is 2 to 15, preferably 3 to 10, for example 4 to 8.

7. Hose according to one of Claims 1 to 6, **characterized in that** at least one fixing element of an adhesive, preferably a hot-melt adhesive, is disposed along the reinforcement element (5, 5').

8. Hose according to one of Claims 1 to 7, **characterized in that** the inner hose layer (2) and, if applicable, also the outer hose layer (4) is/are produced from a transparent material.

9. Hose according to one of Claims 3 to 8, **characterized in that** the reinforcement layer (3) displays diagonal lines (14) which are formed by the reinforcement elements (5, 5') and which, in relation to the longitudinal hose axis (x), preferably enclose an angle (α) of 44 to 64°, in particular 50 to 58°.

## Revendications

1. Tuyau souple destiné au transport de fluides, avec
- une couche intérieure de tuyau souple (2) exposée au fluide (1),
- une couche de renforcement (3), et
- en option, une couche extérieure de tuyau souple (4) entourant la couche de renforcement (3),
dans lequel la couche de renforcement (3) présente au moins un élément de renforcement (5, 5') en forme de bande enroulé en spirale autour de la couche intérieure de tuyau souple (2), et dans lequel la couche de renforcement (3) présente une structure ouverte avec des faces libres (6), de telle manière que la couche intérieure de tuyau souple (2) ne soit couverte qu'en partie par la couche de renforcement (3), **caractérisé en ce que** l'élément de renforcement (5, 5') est formé par un produit maillé.

2. Tuyau souple selon la revendication 1, **caractérisé en ce que** les spires en forme de bande de l'élément de renforcement (5, 5') sont espacées l'une de l'autre suivant l'axe longitudinal (x) du tuyau souple.

3. Tuyau souple selon la revendication 1 ou 2, **caractérisé en ce qu'**il est prévu au moins deux éléments de renforcement (5, 5'), qui sont disposés en spirale en sens opposé l'un de l'autre.

4. Tuyau souple selon l'une quelconque des revendications 1 à 3, **caractérisé en ce que** l'élément de renforcement (5, 5') est fabriqué en fils textiles et/ou métalliques et/ou céramiques et/ou polymères (7, 7', 8, 9).

5. Tuyau souple selon l'une quelconque des revendications 1 à 4, **caractérisé en ce que** l'ouverture des mailles de l'élément de renforcement (5, 5') vaut au moins 1 mm.

6. Tuyau souple selon l'une quelconque des revendications 1 à 5, **caractérisé en ce que** le rapport du diamètre intérieur (D) de la couche intérieure de tuyau souple (2) à la largeur de bande (b) de l'élément de renforcement (5, 5') vaut de 2 à 15, de préférence de 3 à 10, par exemple de 4 à 8.

7. Tuyau souple selon l'une quelconque des revendications 1 à 6, **caractérisé en ce qu'**au moins un élément de fixation en matière adhésive, de préférence en colle fusible, est disposé le long de l'élément de renforcement (5, 5').

8. Tuyau souple selon l'une quelconque des revendications 1 à 7, **caractérisé en ce que** la couche intérieure de tuyau souple (2) et éventuellement aussi la couche extérieure de tuyau souple (4) est fabriquée en un matériau transparent.

9. Tuyau souple selon l'une quelconque des revendications 3 à 8, **caractérisé en ce que** la couche de renforcement (3) présente des lignes diagonales (14) formées par les éléments de renforcement (5, 5'), qui forment de préférence avec l'axe longitudinal du tuyau souple (x) un angle (α) de 44 à 64°, en particulier de 50 à 58°.
